# EUROPEAN PATENT SPECIFICATION

(11) **EP 2 811 777 B1**
(45) Date of publication and mention of the grant of the patent: **15.03.2017**
(21) Application number: 13743597.0
(22) Date of filing: 24.01.2013
(51) Int. Cl.: H04B 7/02, H04B 7/06, H04L 5/00, H04W 24/10, H04W 28/16

(54) **WIRELESS COMMUNICATION SYSTEM AND METHOD FOR CONTROLLING REPORTING SETTING**
DRAHTLOSES KOMMUNIKATIONSSYSTEM UND VERFAHREN ZUR STEUERUNG DER BERICHTSEINSTELLUNG
SYSTÈME DE COMMUNICATION SANS FIL ET PROCÉDÉ DE COMMANDE DE RÉGLAGE DE RAPPORT

(30) Priority: 30.01.2012 JP 2012017280
(43) Date of publication of application: 10.12.2014
(60) Divisional application: 17150474.9
(73) Proprietor: NEC Corporation, Tokyo 108-8001 (JP)
(72) Inventor: INOUE, Takamichi, Tokyo 1088001 (JP); HAMABE, Kojiro, Tokyo 1088001 (JP); KAKURA, Yoshikazu, Tokyo 1088001 (JP); ISHII, Naoto, Tokyo 1088001 (JP); LIU, Le, Tokyo 1088001 (JP)
(74) Representative: MacDougall, Alan John Shaw
(86) International application number: PCT/JP2013/000353
(87) International publication number: WO 2013/114832

(56) References cited:
- WO-A1-2011/006451
- WO-A2-2010/134792
- JP-A- 2011 223 115
- US-A1- 2010 104 033
- US-A1- 2011 281 585
- LG ELECTRONICS: 'Consideration on CSI feedback for CoMP and feedback container' 3GPP TSG-RAN WG1#67 RL-113982 18 November 2011, XP050562289 Retrieved from the Internet: <URL:http:// www.3gpp.org/ftp/tsg_ran/WG1_RL1/TSGR1_67/D ocs/ Rl-113982,zip>
- INTEL CORPORATION: 'DL control signaling for DL CoMP' 3GPP TSG-RAN WG1#67 RL-113937 18 November 2011, XP050561987 Retrieved from the Internet: <URL:http://www.3gpp.org/ftp/tsg_ran/ WG1_RL1/TSGR1_67/Docs/R1-113937.zip>
- SAMSUNG: 'Discussion on the Definition of CQI in CoMP' 3GPP TSG-RAN WG1#67 RL-114225 18 November 2011, XP050562326 Retrieved from the Internet: <URL:http://www.3gpp.org/ftp/tsg_ran/ WG1_RL1/TSGR1_67/Docs/R1-114225.zip>
- ZTE: 'Downlink control signaling for CoMP' 3GPP TSG-RAN WG1#67 RL-113764 18 November 2011, XP050562251 Retrieved from the Internet: <URL:http://www.3gpp.org/ftp/tsg_ran/ WG1_RL1/TSGR1_67/Docs/R1-113764.zip>
- NTT DOCOMO ET AL.: 'Higher layer signaling of CSI-RS and muting configurations' 3GPP TSG-RAN WG2#72BIS R2-110607 21 January 2011, XP050493168 Retrieved from the Internet: <URL:http://www.3gpp.org/ftp/tsg_ran/ WG2_RL2/TSGR2_72bis/Docs/R2-110607.zip>

## Description

### [Technical Field]

The present invention relates to a wireless communication system where coordinated transmission between multiple transmission points is performed and, more particularly, to a system and a method for controlling reporting settings.

### [Background Art]

In 3GPP (3rd Generation Partnership Project), coordinated transmission between multiple transmission points is in the process of standardization. The coordinated transmission between multiple transmission points is also called CoMP transmission (Coordinated Multi-Point transmission) and is aimed at increasing the throughput of user terminals located at the cell edge and/or the average cell throughput. Note that the term "transmission point" here will include equipment with wireless transmission functionality, such as a base station controlling a cell or sector and a remote radio head (RRH). Accordingly, this term will be used assuming that it includes a "radio base station" or "radio section" having such wireless transmission functionality, as well as a "transmission cell" or "transmission sector" generated by them.

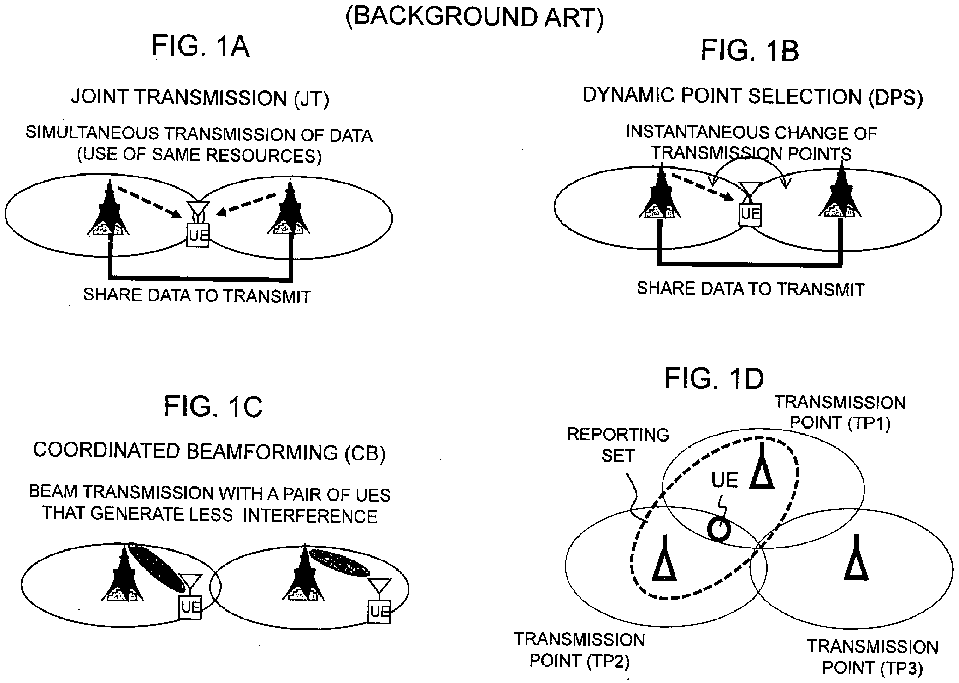

3GPP defines three CoMP transmission schemes: JT (Joint Transmission), DPS (Dynamic Point Selection), and CS/CB (Coordinated Scheduling/Coordinated Beamforming) (see NPL 1). JT, as shown in FIG. 1A, is a scheme in which signal transmission is simultaneously performed by multiple transmission points, enhancing characteristics. DPS, as shown in FIG. 1B, is a scheme in which a transmission point with good channel quality is selected to instantaneously switch thereto, enhancing characteristics. CS/CB, as shown in FIG. 1C, is a scheme in which among CoMP transmission target UEs (User Equipments, or also referred to as mobile stations), transmission points select UEs to allocate (schedule) them radio resources in coordination with each other so that interference between adjacent transmission points will be reduced, enhancing characteristics.

In the meantime, it is known that an optimum CoMP scheme and an optimum coverage and number of coordinating transmission points depend on traffic volume, UE distribution and the like and vary with time (see NPL 2). Accordingly, in order to increase the improvement effect brought about by CoMP transmission, it is necessary to change the CoMP transmission scheme and the coverage and number of coordinating transmission points in response to traffic volume and UE distribution.

In the case where no CoMP transmission is applied, one-to-one communication between a transmission point and a UE is performed. The UE therefore only feeds back information about the channel state (Channel State Information; hereinafter, referred to as CSI) between the one transmission point and the UE. CSI includes an indicator indicating channel quality CQI (Channel Quality Indicator), information regarding a channel co-variance matrix (channel co-variance information), an indicator indicating an optimum precoding matrix PMI (Precoding Matrix Indicator), an indicator indicating an optimum rank RI (Rank Indicator), and the like.

On the other hand, in the case where CoMP transmission is applied, multiple points transmit signals to a UE. Accordingly, the UE needs to notify channel state information on each of the multiple transmission points through feedback. In 3GPP, the following three feedback methods are being discussed with respect to feedback for CoMP transmission (see NPL 3).

In the first feedback method, a UE notifies a network of information about the channel state between the UE and each transmission point. This method is also called per transmission point (TP) CSI feedback or per CSI RS resource feedback. Here, "CSI RS" is a reference signal for measurement of CSI and is considered to be sent by using resources that are orthogonal between each transmission point. This first feedback method can be applied to DPS and CS/CB.

In the second feedback method, a channel phase difference between each transmission point is notified through feedback, in addition to the channel state information notified through feedback in the first feedback method. This method is also called per transmission point CSI feedback with inter transmission point (TP) CSI feedback or per CSI RS resource with inter CSI RS resource feedback. Each transmission point adjusts the phase based on a fed-back phase difference before transmitting a signal, allowing the UE to combine signals in phase. The second feedback method can be applied to Coherent JT, in which signals from multiple transmission points are combined in phase as descried above.

In the third feedback method, when transmission points perform simultaneous transmission, their aggregated channel state information is notified through feedback. This method is also called aggregated CSI feedback or aggregated feedback across multiple CSI RS resources. This third feedback method can be applied to Coherent JT and Non-Coherent JT, in which signals of transmission points are combined as they are left out of phase.

As described above, a suitable one of the feedback methods can be employed depending on the CoMP transmission scheme applied. Accordingly, when CoMP transmission is applied, it is necessary to share reporting setting information between transmission points (a network) and a UE, wherein the reporting setting information sets a combination of reporting-target transmission points (hereinafter, referred to as a reporting set), a feedback method, and the like.

There has been proposed, as an example of a method for sharing such reporting setting information, a method in which a reporting set is notified from transmission points to a UE by using RRC (Radio Resource Control) signaling (see NPL 4). Referring to FIG. 1D, in a network including a UE and three transmission points TP1, TP2, and TP3 that coordinate with each other with respect to the UE, it is assumed that the transmission points TP1 and TP2 are selected as CSI feedback destinations. First, the network semi-statically notifies the UE by using RRC signaling that a reporting set includes TP1 and TP2. The UE notified of the reporting set, measures CSI for TP1 and TP2 and notifies TP1 and TP2 of the measured CSI by feedback.

WO 2011/006451 discloses a system and method for information feedback in a wireless communications system with coordinated multiple point (CoMP) transmission. A method for operating in a communications system, the communications system having a first communications controller and a second communications controller participating in a CoMP cooperation set, the method includes selecting a CoMP processing technique, and reporting channel information to the first communications controller. The channel information is based on the preferred CoMP processing technique.

WO2010/134792 discloses a Coordinated multipoint communication system for improving cell-edge performance for users in a cell-type mobile communication system. In order to enable a coordinated multipoint transmission/reception operation, a user equipment report of a local environment is required to select both coordinated communication modes and communication partners in evolved node B (eNB) base stations. A method is described for feeding back information from user equipment (UE) to a serving base station to enable a coordinated multi-point transmission/reception operation. The information reported through the feedback is classified into two categories corresponding to received signal intensity information and received signal timing information. The UE may select one or both types of information from between the categories to provide feedback. Various overhead-reducing reporting formats are also described.

### [Citation List]

### [Non-patent Literature]

[NPL 1] 3GPP TR.36.819, "Coordinated multi-point operation for LTE physical layer aspects (Section 5.1.3)"
[NPL 2] 3GPP R1-112224, "CoMP Performance Analysis in Scenario 3 and 4 for non full buffer traffic model," Intel
[NPL 3] 3GPP R1-114352, "Final Report of 3GPP TSG RAN WG1 #66bis v1.1.0 (Section 7.5.2)"
[NPL 4] 3GPP R1-113354, "Hierarchical Feedback for DL CoMP and DL MIMO," Ericsson, ST-Ericsson

### [Summary of Invention]

### [Technical Problem]

However, RRC signaling is a means for notifying control information related to the RRC layer and, since it notifies in a semi-static manner (at a cycle of approximately 100 ms at minimum), cannot follow environmental changes such as changes in traffic volume and UE distribution. Accordingly, an optimum reporting setting cannot be achieved. Hence, the above-mentioned reporting setting method according to NPL 4 has the problem that the characteristic improvement effect brought about by CoMP transmission is lessened.

An object of the present invention is to provide a method for controlling a reporting setting by which reporting setting can be quickly changed in a system where CoMP transmission is performed, as well as a wireless communications system using the same.

### [Solution to Problem]

The present invention provides a wireless communications system based on a coordinated transmission scheme in which multiple transmission stations included in a network perform transmission in coordination with each other, wherein the network is configured to notify a plurality of reporting settings for channel state information to a reception station that is a target of the coordinated transmission scheme, and the transmission stations and the reception station are configured to share, by notifying an identifier corresponding to a reporting setting to be applied from among the plurality of reporting settings from the transmission stations to the reception station, the reporting setting to be applied, characterized in that an interval of notifying the identifier corresponding to the reporting setting to be applied is shorter than an interval of notifying the plurality of reporting settings.

The invention also provides a mobile station configured to be a target of a coordinated transmission scheme in a wireless communications system based on the coordinated transmission scheme in which multiple transmission stations included in a network perform transmission in coordination with each other, characterized by comprising: reception means for receiving a plurality of reporting settings for channel state information from the network; and control means for sharing, by receiving an identifier corresponding to a reporting setting to be applied from among the plurality of reporting settings from the transmission stations, the reporting setting to be applied with the transmission stations, characterized in that an interval of notifying the identifier corresponding to the reporting setting to be applied is shorter than an interval of notifying the plurality of reporting settings.

The invention also provides a radio base station in a wireless communication system based on a coordinated transmission scheme, wherein the radio base station is configured to perform transmission to mobile stations in coordination with other radio base stations included in a network, the radio base station comprising: transceiver means for performing wireless communication with a mobile station that is a target of the coordinated transmission scheme; and control means for notifying the mobile station of a plurality of reporting settings for channel state information and sharing, by notifying an identifier corresponding to a reporting setting to be applied from among the plurality of reporting settings to the mobile station, the reporting setting to be applied with the mobile station, wherein an interval of notifying the identifier corresponding to the reporting setting to be applied is shorter than an interval of notifying the plurality of reporting settings.

The invention also provides a method for controlling reporting setting in a wireless communication system based on a coordinated transmission scheme in which multiple transmission stations included in a network perform transmission in coordination with each other, the method comprising: by the network, notifying a plurality of reporting settings for channel state information to a reception station that is a target of the coordinated transmission scheme; and by the transmission stations and the reception station, sharing, by notifying an identifier corresponding to a reporting setting to be applied from among the plurality of reporting settings from the transmission stations to the reception station, the reporting setting to be applied among the plurality of reporting settings; characterized in that an interval of notifying the identifier corresponding to the reporting setting to be applied is shorter than an interval of notifying the plurality of reporting settings.

### [Advantageous Effects of Invention]

According to the present invention, in a system where CoMP transmission is performed, multiple pieces of reporting setting information are notified to a reception station that is a CoMP transmission target, whereby reporting setting can be quickly changed, thus enabling reporting setting to follow changes in traffic volume and UE distribution.

### [Brief Description of Drawings]

[FIG. 1] FIGS. 1A, 1B, and 1C are schematic network diagrams showing CoMP transmission schemes JT, DPS, and CS/CB, respectively, and FIG. 1D is a network diagram for describing a method for notifying a reporting set.
[FIG. 2] FIG. 2 is a block diagram showing a configuration of principal functions on a network side in a wireless communications system according to a first exemplary embodiment of the present invention.
[FIG. 3] FIG. 3 is a block diagram showing a configuration of principal functions of a mobile station in the wireless communications system shown in FIG. 2.
[FIG. 4] FIG. 4 is a flowchart showing network-side and mobile station-side control operations in the wireless communications system shown in FIG. 2.
[FIG. 5] FIG. 5A is a network diagram for describing a first example of a method for controlling reporting setting in the wireless communications system shown in FIG. 2, FIG. 5B is a diagram showing an example of reporting setting candidates for which RRC signaling is performed, and FIG. 5C is a diagram showing another example of reporting setting candidates.
[FIG. 6] FIG. 6 is a schematic diagram for describing a method for notifying a reporting setting through L1/L2 signaling in the first example shown in FIG. 5.
[FIG. 7] FIG. 7A is a network diagram for describing a second example of the method for controlling reporting setting in the wireless communications system shown in FIG. 2, FIG. 7B is a diagram showing an example of reporting setting candidates for which RRC signaling is performed, and FIG. 7C is a diagram showing another example of reporting setting candidates.
[FIG. 8] FIG. 8 is a schematic diagram for describing a method for notifying a reporting setting through L1/L2 signaling in the second example shown in FIG. 7.
[FIG. 9] FIG. 9A is a network diagram for describing a third example of the method for controlling reporting setting in the wireless communications system shown in FIG. 2, FIG. 9B is a diagram showing an example of reporting setting candidates for which RRC signaling is performed, and FIG. 9C is a diagram showing another example of reporting setting candidates.
[FIG. 10] FIG. 10 is a schematic diagram for describing a method for notifying a reporting setting through L1/L2 signaling in the third example shown in FIG. 9.
[FIG. 11] FIG. 11 is a block diagram showing configurations of principal functions of a network and a mobile station in a wireless communications system according to a second exemplary embodiment of the present invention.
[FIG. 12] FIG. 12 is a flowchart showing network-side and mobile station-side control operations in the wireless communications system shown in FIG. 11.
[FIG. 13] FIG. 13 is a schematic diagram showing a feedback method according to a fourth example of a method for controlling reporting setting in the wireless communications system shown in FIG. 11.
[FIG. 14] FIG. 14 is a schematic diagram showing a feedback method according to a fifth example of the method for controlling reporting setting in the wireless communications system shown in FIG. 11.
[FIG. 15] FIG. 15 is a schematic diagram showing a feedback method according to a sixth example of the method for controlling reporting setting in the wireless communications system shown in FIG. 11.
[FIG. 16] FIG. 16 is a block diagram showing configurations of principal functions of a network and a mobile station in a wireless communications system according to a third exemplary embodiment of the present invention.

### [Description of Embodiments]

According to the present invention, a network notifies a mobile station of multiple pieces of reporting setting information for channel state information, and among them, reporting setting information to be applied is shared between the network and the mobile station. Thus, reporting setting can be quickly changed according to changes in the wireless environment, enabling reporting setting to be optimized for changes in traffic volume and UE distribution in the network. Consequently, it is possible to increase the characteristic improvement effect of CoMP transmission. Hereinafter, exemplary embodiments and examples of the present invention will be described in detail with reference to drawings.

### 1. First exemplary embodiment

According to a first exemplary embodiment of the present invention, reporting setting is implemented through two-step signaling. In the first step, information about multiple reporting settings is notified from transmission points to a UE through RRC signaling. In the second step, information about a reporting setting to be applied is notified from the transmission points to the UE through Layer 1/Layer 2 (L1/L2) signaling. Note that L1/L2 signaling is a control signal related to the physical layer, for which an updating cycle of several milliseconds (ms) is assumed. Since the cycle of RRC signaling is approximately 100 ms at minimum, intervals of notification by RRC signaling is longer than intervals of notification by L1/L2 signaling. Accordingly, reporting setting can be changed according to changes in the radio status, network load, and the like, by notifying a UE of multiple candidates for reporting setting at the notification intervals of certain signaling, and then deciding which candidate will be applied through signaling that has shorter notification intervals.

### 1.1) System configuration

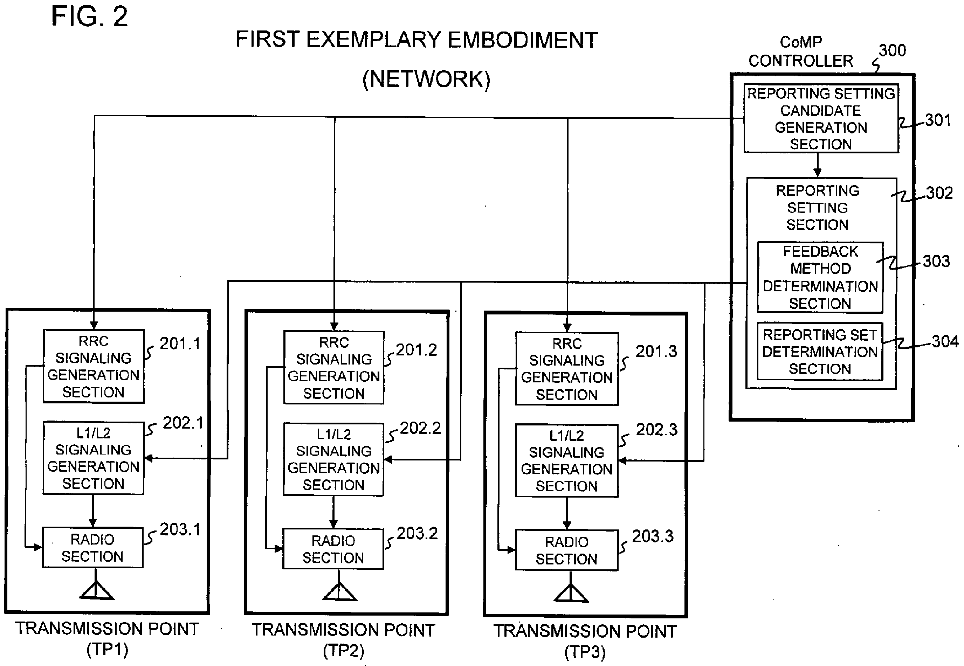

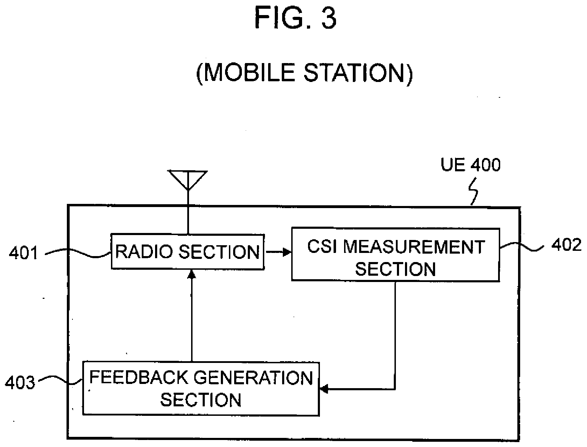

Referring to FIG. 2, a system according to the first exemplary embodiment of the present invention includes a CoMP controller 300 and multiple transmission points TP, wherein the CoMP controller 300 performs reporting setting control for the multiple transmission points TP. Here, to avoid complicating description, three transmission points are provided. Although only transmission points TP are shown in the drawing, it is assumed that transceiver sections, radios sections, or radio base stations including the transmission points TP are provided. A functional configuration of a mobile station UE, which performs wireless communication with each transmission point TP, is shown in FIG. 3.

The CoMP controller 300 includes a reporting setting candidate generation section 301 and a reporting setting section 302. The reporting setting section 302 includes a feedback method determination section 303 and a reporting set determination section 304. The CoMP controller 300 further includes a control section (not shown), which controls reporting setting operations, which will be described later. The transmission points TP1-TP3 are provided with RRC signaling generation sections 201.1-201.3, respectively, L1/L2 signaling generation sections 202.1-202.3, respectively, and radio sections 203.1-203.3, respectively.

The reporting setting candidate generation section 301 of the CoMP controller 300 generates multiple reporting setting candidates to be notified to the UE through RRC signaling, and outputs them to the reporting setting section 302 and each of the RRC signaling generation sections 201.1-201.3 of the transmission points. The reporting setting section 302 determines a reporting setting to be actually used among the reporting setting candidates input from the reporting setting candidate generation section 301. Specifically, the feedback method determination section 303 determines a feedback method corresponding to a CoMP transmission scheme to be used, and the reporting set determination section 304 determines reporting-target transmission points. The reporting setting determined by the reporting setting section 302 is sent to each of the L1/L2 signaling generation sections 202.1-202.3 of the transmission points.

At each transmission point, the RRC signaling generation sections 201.1-201.3 generate, as information in RRC signaling, information about the reporting setting candidates input from the reporting setting candidate generation section 301 and outputs it to the radio sections 203.1-203.3. The radio sections 203.1-203-3 notify the UE of the input information about the reporting setting candidates by using RRC signaling.

The respective L1/L2 signaling generation sections 202.1-202-3 of the transmission points generate, as information in L1/L2 signaling, the reporting setting received from the reporting setting section 302 and output it to the radio sections 203.1-203.3. The radio sections 203.1-203.3 notify the UE of the reporting setting by using L1/L2 signaling.

Referring to FIG. 3, the UE 400, which is a mobile station in the system according to the present exemplary embodiment, includes a radio section 401, a CSI measurement section 402, and a feedback generation section 403, and further includes a control section (not shown) that controls reporting setting operation. The radio section 401 receives RRC signaling and L1/L2 signaling from the transmission points and outputs reporting setting related information to the CSI measurement section 402. The CSI measurement section 402 measures CSI in accordance with the input reporting setting related information and outputs a result of the measurement to the feedback generation section 403. Note that CSI includes an indicator indicating channel quality (CQI: Channel Quality Indicator), information regarding a channel co-variance matrix (channel co-variance information), an indicator indicating an optimum precoding matrix (PMI: Precoding Matrix Indicator), an indicator indicating an optimum rank (RI: Rank Indicator), and the like. The feedback generation section 403 generates a feedback signal from the input result of the CSI measurement and outputs it to the radio section 401. The radio section 401 notifies the CSI to the network (radio sections or radio base stations including the transmission points) through feedback.

### 1.2) System operation

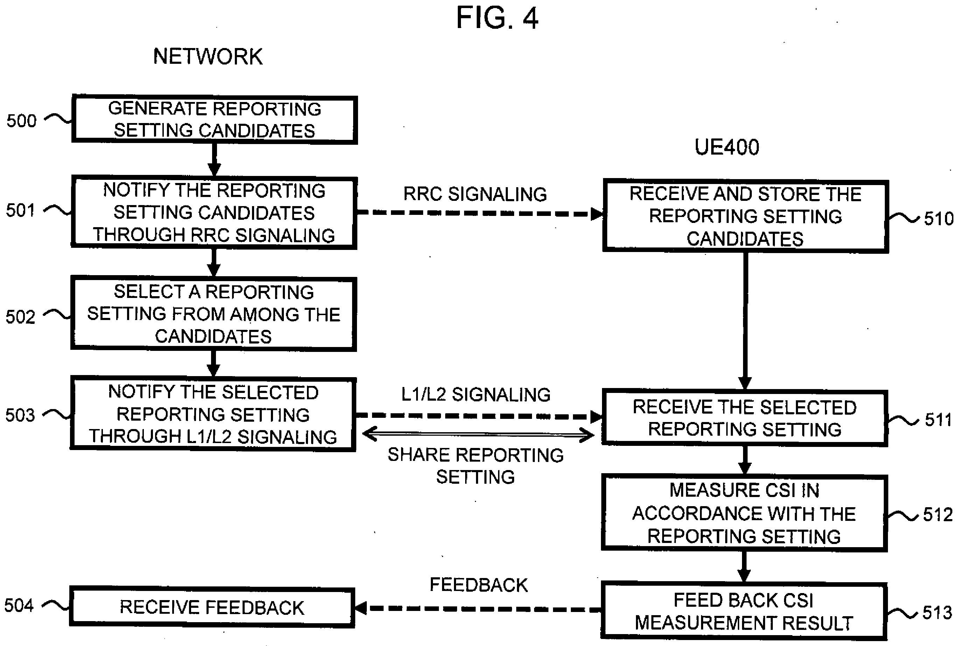

Next, a description will be given of operations of the network (CoMP controller and transmission points) and the UE in the first exemplary embodiment, with reference to FIG. 4.

Referring to FIG. 4, first, the reporting setting candidate generation section 301 of the CoMP controller 300 generates multiple reporting setting candidates (Operation 500) and sends them to the UE 400 via the transmission points TP through RRC signaling (Operation 501). The radio section 401 of the UE 400 reads information about the reporting setting candidates from the RRC signaling received from the transmission points TP, and the CSI measurement section 402 stores these reporting setting candidates (Operation 510).

Next, at the network, a reporting setting to be actually used is selected from among the reporting setting candidates (Operation 502). In the present exemplary embodiment, the network determines a reporting setting by using information that is already known to the network side. For example, a reporting setting to be applied is determined based on the traffic volume or the like at each transmission point.

Next, the selected reporting setting is notified to the UE 400 through L1/L2 signaling (Operation 503), and the UE 400 receives the notified reporting setting (Operation 511), whereby the reporting setting is shared between the network side and the UE side. The UE 400 measures CSI in accordance with the notified reporting setting (Operation 512) and notifies the measured CSI to the network through feedback (Operation 513). The radio sections or radio base stations including the transmission points TP on the network side receive information about the CSI notified through feedback (Operation 504).

### 1.3) First example

According to a first example in the above-described first exemplary embodiment, the network notifies the UE of multiple reporting settings through RRC signaling, selects one reporting setting to be applied from among the multiple reporting settings, and notifies the UE of an identifier identifying the selected reporting setting through L1/L2 signaling. As described earlier, a reporting setting includes information about a combination of reporting-target transmission points (reporting set) and about a feedback method used for the reporting set.

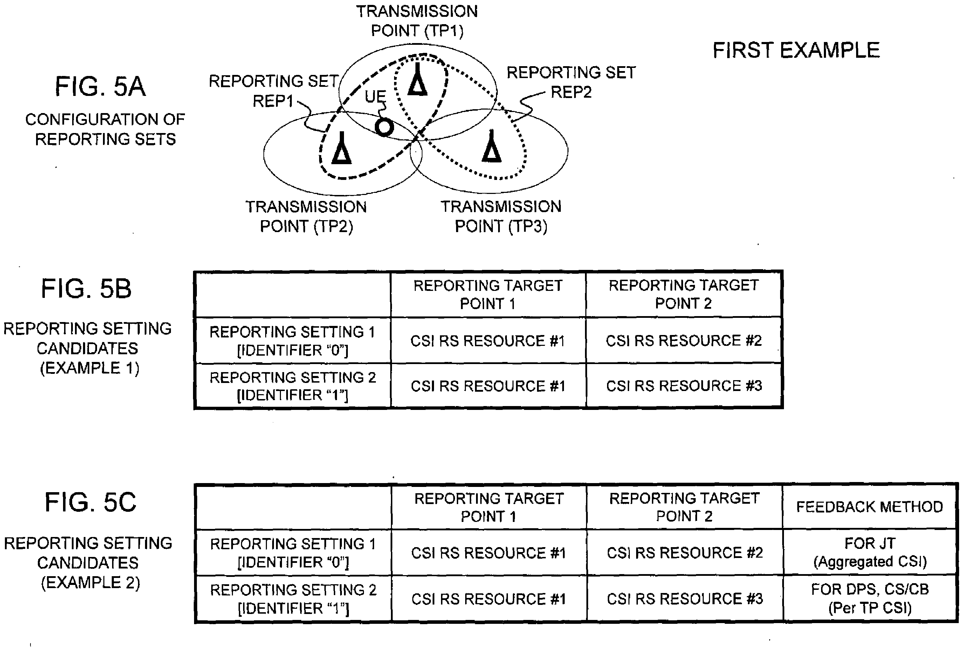

Hereinafter, RRC signaling for notifying multiple reporting settings will be described with reference to FIG. 5. A description will be given of a case, as an example, where there is one UE, for which three transmission points (TP1, PT2, and PT3) coordinate with each other as shown in FIG. 5A. Here, two reporting setting candidates are defined, of which a reporting setting 1 has TP1 and PT2 as a reporting set REP1, and a reporting setting 2 has TP1 and PT3 as a reporting set REP2.

FIG. 5B shows an example of a signal format used when information about multiple reporting settings is notified through RRC signaling. The reporting setting information is, for example, information included in CQI-ReportingConfig, containing information about reporting intervals and a feedback method (also referred to as a feedback mode) and the like. Moreover, CQI-ReportingConfig contains, as information identifying transmission points, CSI RS source numbers, PCIs (Physical Cell IDs), or the like. Here, a description will be given by using an example in which CSI RS resource numbers are used for information identifying the respective transmission points. CSI RS is a reference signal for measurement of CSI and is considered to be sent by using resources that are orthogonal between each transmission point. CSI RS resources #1, #2, and #3 are identifiers to identify the resource locations for CSI RSs transmitted by TP1, TP2, and TP3, respectively. 3GPP currently prepares a maximum of 32 patterns of CSI RS resources that are orthogonal in time, frequency, or code. The individual resources correspond to CSI RS resource numbers. Since CSI RS resources and their numbers are known to the network and UE sides, the UE can find which CSI RS resource it should measure for CSI if the network notifies the UE of a CSI RS resource number. Here, an identifier used at the time of L1/L2 signaling is assigned to each reporting setting candidate. In this example, an identifier "0" is assigned to the reporting setting 1, while an identifier "1" is assigned to the reporting setting 2.

FIG. 5C shows another example of a signal format used when multiple reporting settings are notified through RRC signaling. In this example, a reporting setting includes not only a reporting set REP but also a feedback method. Here, aggregated CSI, which is a feedback method for perming the CoMP transmission scheme JT, is set for the reporting set REP1 including TP1 and TP2, while per TP CSI, which is a feedback method for performing the CoMP transmission scheme DPS or CS/CB, is set for the reporting set REP2 including TP1 and TP3. Note that although CSI RS resource numbers are used for information to identify the individual transmission points, PCIs (Physical Cell IDs) or the like can also be used. Moreover, although a description is given assuming that the number of coordinating transmission points = 3 in the present example, the present example is applicable if the number is 2 or greater. Similarly, although a description is given of a case where the number of reporting setting candidates = 2, the present example is also applicable even if the number is 3 or greater.

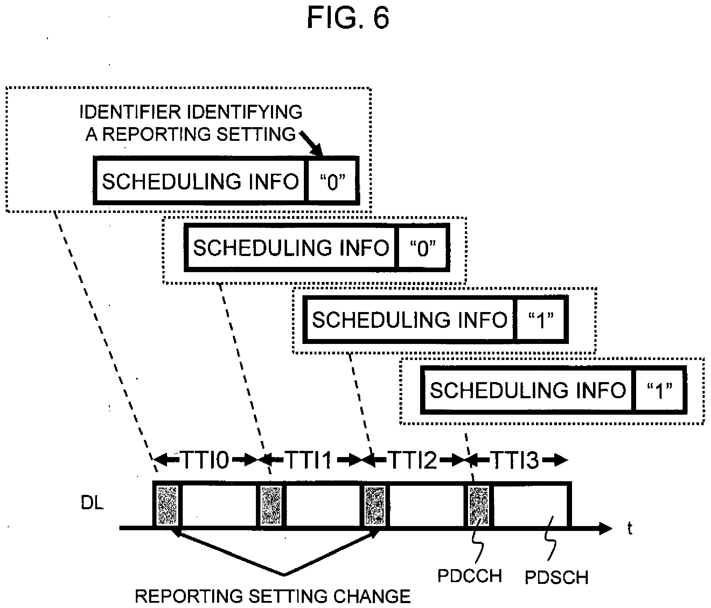

Referring to FIG. 6, in the first example, a selected reporting setting is notified through L1/L2 signaling. Information in downlink L1/L2 signaling is called DCI (Downlink Control Information) and is transmitted over PDCCH (Physical Downlink Control Channel). DCI includes scheduling information, which specifies the location of a resource assigned to each UE, MCS (Modulation Coding Scheme) information, which indicates a modulation scheme and a coding rate, and the like. In the first example, the identifier "0" or "1," which identifies a reporting setting, is inserted in DCI at every TTI (Transmission Time Interval). Accordingly, the identifier "0" identifying the reporting setting 1 is notified at TTI0 and TTI1, and the identifier "1" identifying the reporting setting 2 is notified at TTI2 and TTI3.

In the first example, since the identifier of one of multiple reporting settings is notified through L1/L2 signaling, the overhead of L1/L2 signaling at each TTI can be made smaller. Note that although an identifier identifying a reporting setting is inserted at every TTI in the first example, an identifier identifying a reporting setting may be inserted only at TTIs when reporting setting is changed (for example, only at TTI0 and TTI2).

### 1.4) Second example

Differences between a second example, which will be described below, and the above-described first example in the first exemplary embodiment are as follows. In RRC signaling of the first example, reporting sets and feedback methods for the reporting sets are notified to a UE. In the second example, however, reporting-target transmission points and feedback methods for the transmission points are notified. Moreover, in L1/L2 signaling of the first example, notified is the identifier of a selected one of reporting settings, which includes a combination of multiple transmission points. In the second example, however, only information about a reporting setting to be applied, among respective reporting settings for the individual transmission points notified through RRC signaling, is notified to a UE.

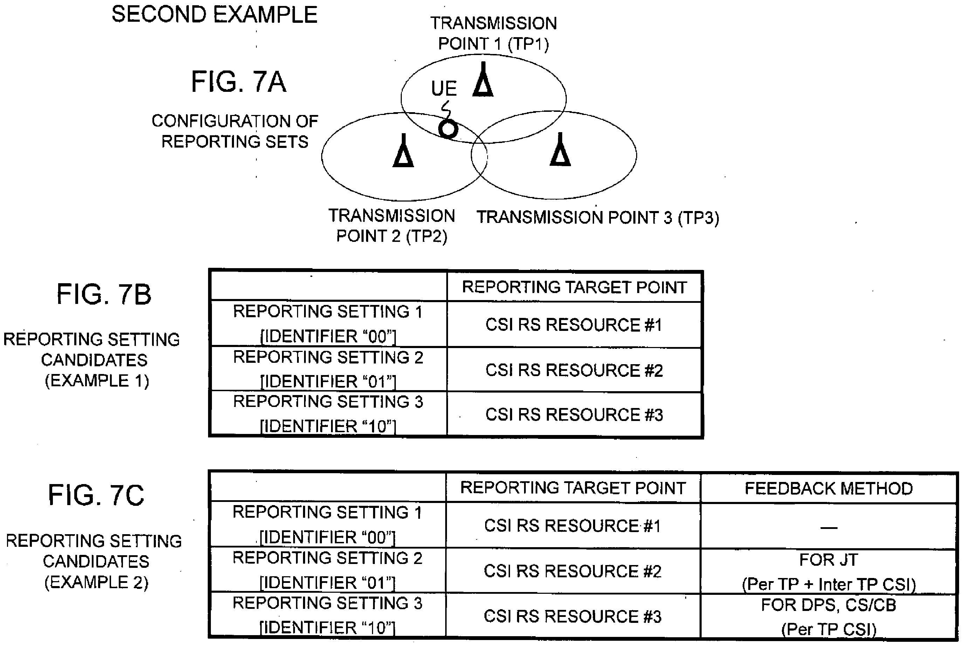

Referring to FIG. 7A, a description will be given of a case, as an example, where there is one UE, for which three transmission points (TP1, TP2, and PT3) coordinate with each other. In the second example, a reporting set includes TP1 in a reporting setting 1, TP2 in a reporting setting 2, and TP3 in a reporting setting 3.

FIG. 7B shows an example of a signal format used when reporting setting candidates are notified through RRC signaling. Here, CSI RS resource numbers are used for information to identify the individual transmission points, and identifiers to be used at the time of L1/L2 signaling are assigned to the individual transmission points. In this example, identifiers "00," "01," and "10" are assigned to the reporting settings 1, 2, and 3, respectively.

FIG. 7C shows another example of a signal format used when reporting setting candidates are notified through RRC signaling. In FIG. 7C, not only transmission points but also feedback methods are included. Here, assuming that TP1 is a serving transmission point, a feedback between the serving transmission point and the UE is set in the reporting setting 1; per TP CSI and inter TP CSI, which are feedback methods for performing JT, are set in the reporting setting 2; per TP CSI, which is a feedback method for performing CS/CB, is set in the reporting setting 3. Although CSI RS resource numbers are used for information to identify the individual transmission points here, PCIs (Physical Cell IDs) or the like can also be used.

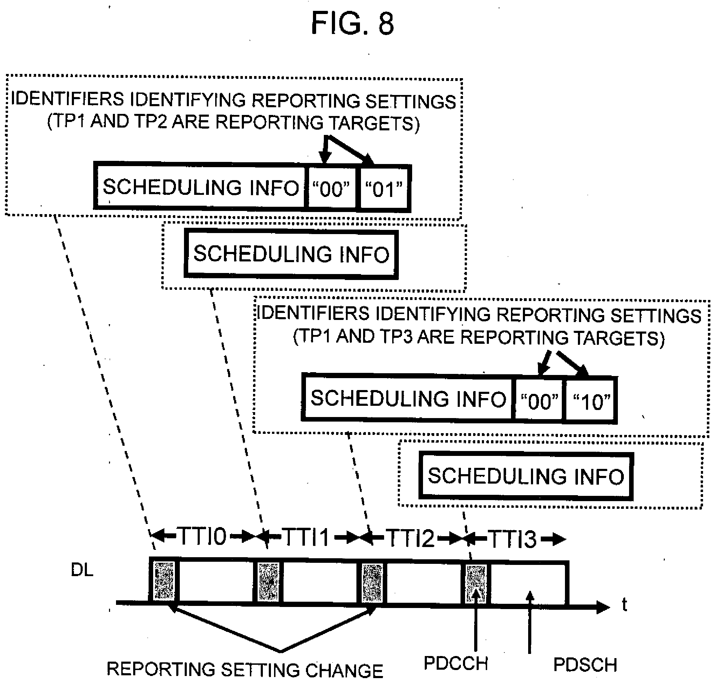

Referring to FIG. 8, the identifiers of applied reporting settings only are notified through L1/L2 signaling when reporting setting is updated. Accordingly, the identifiers "00" and "01" identifying the reporting settings 1 and 2 are transmitted at TTI0, and the identifiers "00" and "10" identifying the reporting settings 1 and 3 are transmitted at TTI2 when reporting setting is updated to the reporting setting 2.

Note that although a new identifier is assigned to each reporting setting in the second example, existing information such as a CSI RS resource number or PCI can also be used for the identifier of a reporting setting. Moreover, in the second example, identifiers identifying reporting settings are transmitted only at TTIs when reporting setting is changed (only at TTI0 and TTI2). However, identifiers identifying reporting settings may be inserted at every TTI as in the first example.

Additionally, according to the second example, since a reporting setting can be configured for each transmission point, it is possible to suppress an increase in the overhead of RRC signaling even if the number of elements in a reporting set grows.

### 1.5) Third example

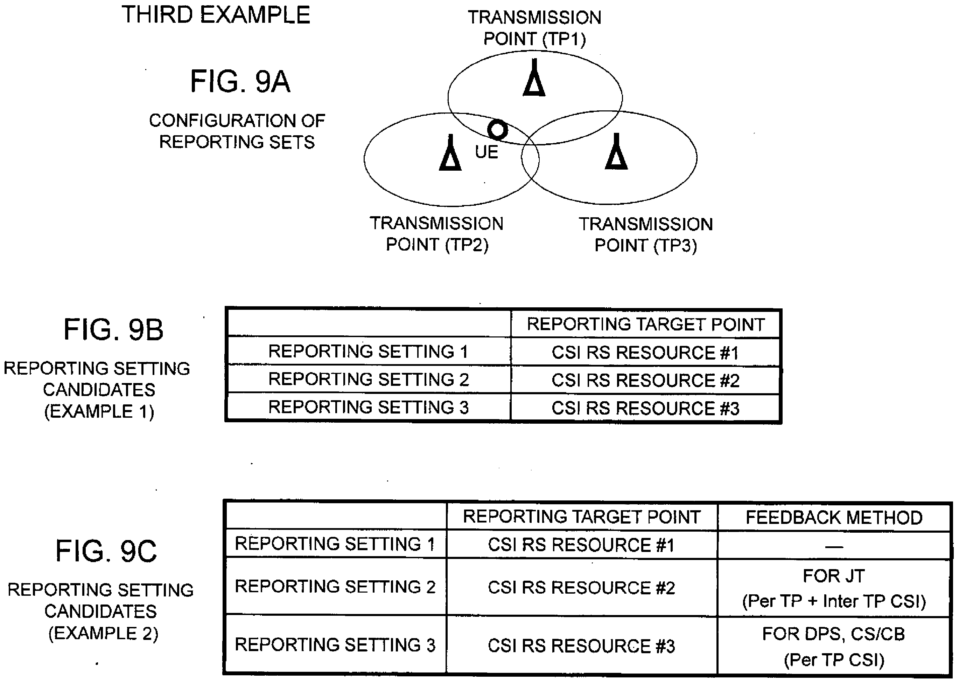

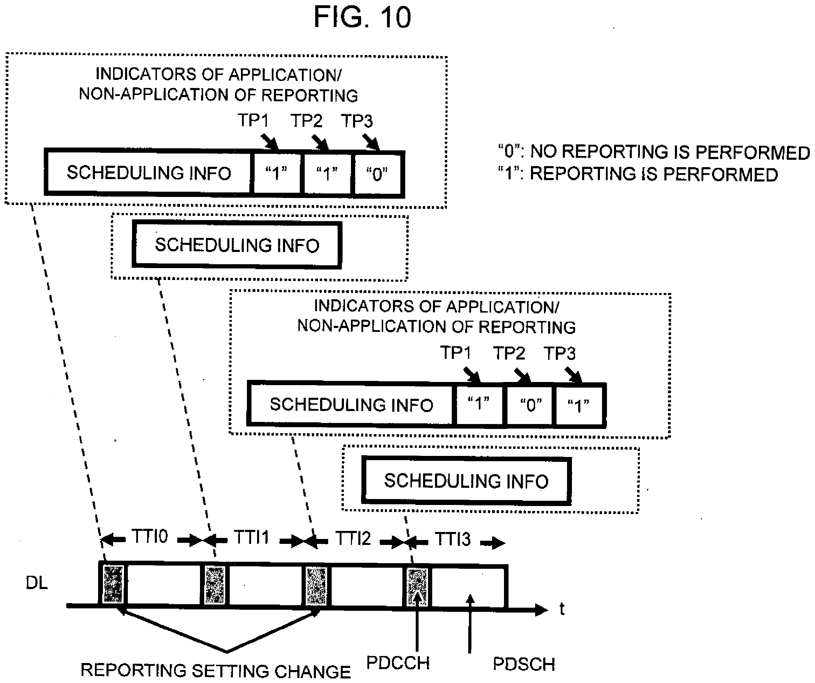

According to a third example, which will be described below, reporting-target transmission points and feedback methods for the transmission points are notified through RRC signaling, as in the above-described second example. A difference from the second example is the method of L1/L2 signaling. In the second example, only information about reporting settings to be applied, among respective reporting settings for the individual transmission points notified through RRC signaling, is notified. In the third example, however, an indicator of whether or not a reporting setting is applied is notified with respect to each of multiple reporting settings. Hereinafter, a description will be given with reference to FIGS. 9 and 10.

Referring to FIG. 9A, reporting sets in the third example are configured as in the above-described second example, and therefore a description thereof will be omitted.

FIG. 9B shows an example of a signal format used when reporting setting candidates are notified through RRC signaling. Here, CSI RS resource numbers are used for information to identify the individual transmission points. In the third example, since application or non-application of reporting is sent with respect to all reporting setting candidates, it is not necessary to attach a unique identifier to each reporting setting unlike the first or second example.

FIG. 9C shows another example of a signal format used when reporting setting candidates are notified through RRC signaling. In this example, not only transmission points but also feedback methods are included. Assuming that TP1 is a serving transmission point, an existing feedback between the serving transmission point and the UE is set in a reporting setting 1; a feedback method for performing JT is set in a reporting setting 2; a feedback method for performing CS/CB is set in a reporting setting 3.

FIG. 10 shows an example in which an indicator of whether or not reporting is performed is notified for each of the multiple reporting settings through L1/L2 signaling when reporting setting is updated. In this example, it is assumed that an indicator "0" indicates that no reporting is performed, while an indicator "1" indicates that reporting is performed, and that notification thereof is made with respect to the reporting settings 1, 2, and 3 in this order. Accordingly, at TTI0, since it is notified that the reporting settings 1 and 2 are applied, the indicators "1," "1," and "0" are transmitted in this order. At TTI2, since reporting setting is updated to the reporting settings 1 and 3, the indicators "1," "0," and "1" are transmitted in this order.

Note that although a description is given in the third example by using an example where notification for the individual reporting settings is made in the fixed order of the reporting settings 1, 2, and 3, existing information such as CSI RS resource numbers or PCIs may be transmitted as the identifiers of the reporting settings at the same time.

Moreover, in the third example, the indicators indicating reporting setting are transmitted only at TTIs when reporting setting is changed (only at TTI0 and TTI2). However, the indicators indicating reporting setting may be inserted at every TTI as in the first example.

Further, according to the third example, since a reporting setting can be configured for each transmission point as in the second example, it is possible to suppress an increase in the overhead of RRC signaling. Furthermore, since indicators with respect to all of the multiple reporting settings are notified through L1/L2 signaling, the overhead of RRC signaling can be made smaller than that of the second example.

### 1.6) Modification example

The above-described first to third examples show examples in which L1/L2 signaling is performed by using PDCCH (Physical Downlink Control Channel). However, other channels such as PDSCH (Physical Downlink Shared Channel) can also be used.

Moreover, the first exemplary embodiment has the advantage that the overhead of L1/L2 signaling can be suppressed by notifying multiple reporting setting candidates through RRC signaling. Further, the network can optimize reporting setting by using information that is already known to the network side.

### 2. Second exemplary embodiment

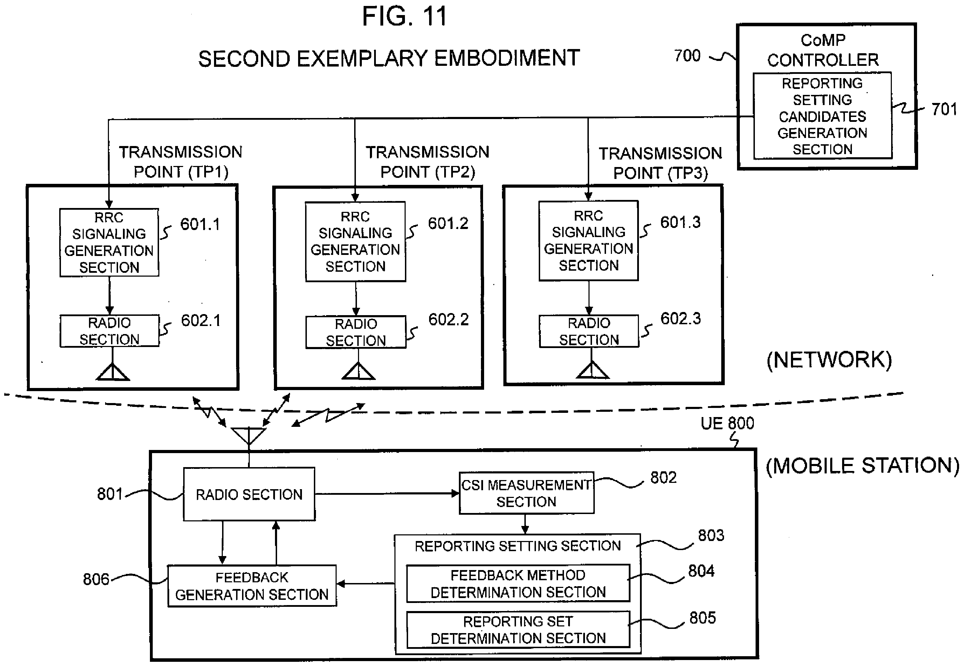

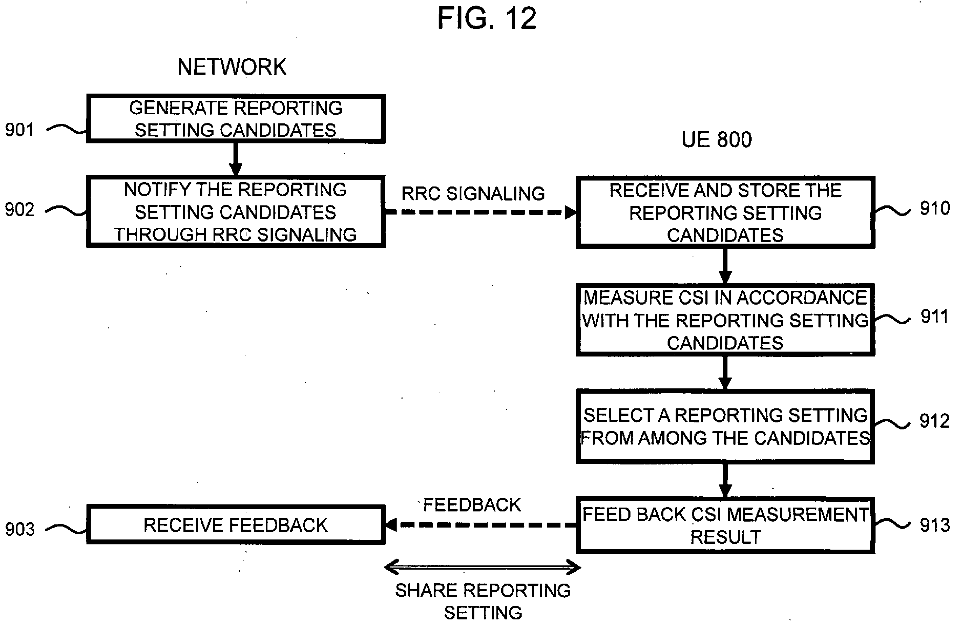

In a system according to a second exemplary embodiment of the present invention, information about multiple reporting settings is notified from transmission points to a UE by using RRC signaling in the first step as in the first exemplary embodiment, but the second step is different from that of the first exemplary embodiment. In the first exemplary embodiment, information about a reporting setting to be applied is notified from the network to the UE. In the second exemplary embodiment, however, information about a reporting setting to be applied is notified from the UE to the transmission points through feedback. Note that an updating cycle of approximately several to several tens milliseconds is assumed for feedback. Since the minimum cycle of RRC signaling is approximately 100 ms, intervals of notification by RRC signaling are longer than time intervals of feedback. Accordingly, it is possible to notify multiple reporting setting candidates to the UE at the notification intervals of certain signaling and to determine, depending on changes in the radio status, which candidate is applied, by using signaling that has shorter notification intervals. Hereinafter, the second exemplary embodiment of the present invention will be described with reference to FIGS. 11 and 12.

### 2.1) System configuration

Referring to FIG. 11, the system according to the second exemplary embodiment of the present invention includes a CoMP controller 700, multiple transmission points TP, and a UE 800 that is a user terminal. The CoMP controller 700 notifies reporting setting candidates to the UE through RRC signaling, and the UE determines one candidate to be applied from among the notified candidates and feeds it back to the transmission points. Here, to avoid complicating description, three transmission points are configured, and only transmission points TP at the respective transmission points are shown in the drawing.

The CoMP controller 700 includes a reporting setting candidate generation section 701, while the transmission points TP1-TP3 includes RRC signaling generation sections 601.1-601.3, respectively, and radio sections 602.1-602.3, respectively.

The reporting setting candidate generation section 701 of the CoMP controller 700 generates reporting setting candidates for CSI to be notified to the UE 800 through RRC signaling and outputs them to each of the RRC signaling generation sections 601.1-601.3 of the transmission points. At each transmission point, the respective RRC signaling generation sections 601.1-601.3 generate information about the reporting setting candidates input from the reporting setting candidate generation section 701 as information in RRC signaling and output it to the radio sections 602.1-602.3. The radio sections 602.1-602.3 notify the input information about the reporting setting candidates to the UE 800 by using RRC signaling.

The UE 800 according to the present exemplary embodiment includes a radio section 801, a CSI measurement section 802, a reporting setting section 803, and a feedback generation section 806. The reporting setting section 803 includes a feedback method determination section 804 and a reporting set determination section 805. The radio section 801 receives RRC signaling from the transmission points and outputs reporting setting related information to the CSI measurement section 802. The CSI measurement section 802 measures CSI in accordance with the input reporting setting related information and outputs a result of the measurement to the reporting setting section 803. Note that CSI includes an indicator indicating channel quality (CQI: Channel Quality Indicator), information regarding a channel co-variance matrix (channel co-variance information), an indicator indicating an optimum precoding matrix (PMI: Precoding Matrix Indicator), an indicator indicating an optimum rank (RI: Rank Indicator), and the like.

The reporting setting section 803, when receiving the setting candidates generated by the reporting setting candidate generation section 701 via the transmission points, determines a setting to be actually applied. The feedback method determination section 804 determines a feedback method corresponding to a CoMP transmission scheme to be used, and the reporting set determination section 805 determines transmission points that are to be reporting targets. The reporting setting section 803 outputs a CSI measurement result corresponding to the determined setting to the feedback generation section 806, which then based on the input CSI measurement result generates a feedback signal, which is then transmitted to the network (transmission points) by the radio section 801.

2.2) System operation

Referring to FIG. 12, first, the CoMP controller 700 on the network side generates reporting setting candidates (Operation 901). Next, the generated reporting setting candidates are notified from the transmission points to the UE through RRC signaling (Operation 902).

The UE 800 on the user terminal side, when receiving the RRC signaling, identifies the reporting setting candidates from the received signal and stores them (Operation 910). Subsequently, the UE 800 performs CSI measurement in accordance with information about the reporting setting candidates (Operation 911) and selects a setting to be used for actual reporting from among the candidates (Operation 912). In the second exemplary embodiment, the UE 800 determines a reporting setting by using information that is already known to the UE side. For example, a reporting setting can be determined based on a difference in receive power between the transmission points participating in CoMP transmission or the like. The UE 800, in accordance with the thus selected reporting setting, feeds back CSI along with information for identifying the selected reporting setting to the network side (Operation 913), and the transmission points on the network side receive such information through feedback (Operation 903), whereby the reporting setting is shared between the transmission points and the UE.

### 2.3) Fourth example

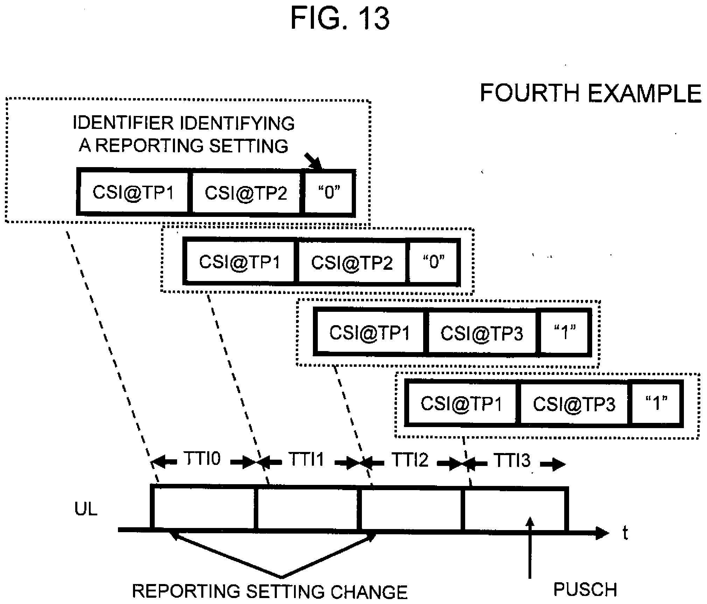

A description will be given of a fourth example in the above-described second exemplary embodiment. In the fourth example, the network notifies multiple reporting settings to the UE 800 through RRC signaling, and the UE 800 from among them selects one reporting setting to be applied and notifies an identifier identifying the selected reporting setting to the network side through feedback. A reporting setting includes information about a combination of reporting-target transmission points (a reporting set) and a feedback method for the reporting set, as described already. Note that RRC signaling used to notify multiple reporting settings is as described in the first example, and therefore a description thereof will be omitted. A description will be given of an example in which a selected reporting setting is notified through feedback, with reference to FIG. 13.

FIG. 13 shows an example in which feedback is performed by using PUSCH (Physical Uplink Shared Channel). Information to be fed back includes channel state information (CSI) and the like on transmission points selected in a reporting set. In the fourth example, the identifier "0" or "1" identifying a reporting setting is inserted in a feedback at every TTI. Here, the identifier "0" identifying the reporting setting 1 is notified at TTI0 and TTI1, while the identifier "1" identifying the reporting setting 2 is notified at TTI2 and TTI3. Note that apart from an identifier identifying a reporting setting being inserted at every TTI, it is also possible to insert an identifier identifying a reporting setting only at TTIs when reporting setting is changed (here, only at TTI0 and TTI2). According to the fourth example, the identifier of one of multiple reporting settings is notified through feedback, bringing about the advantage that the overhead of a feedback at each TTI can be made smaller.

### 2.4) Fifth example

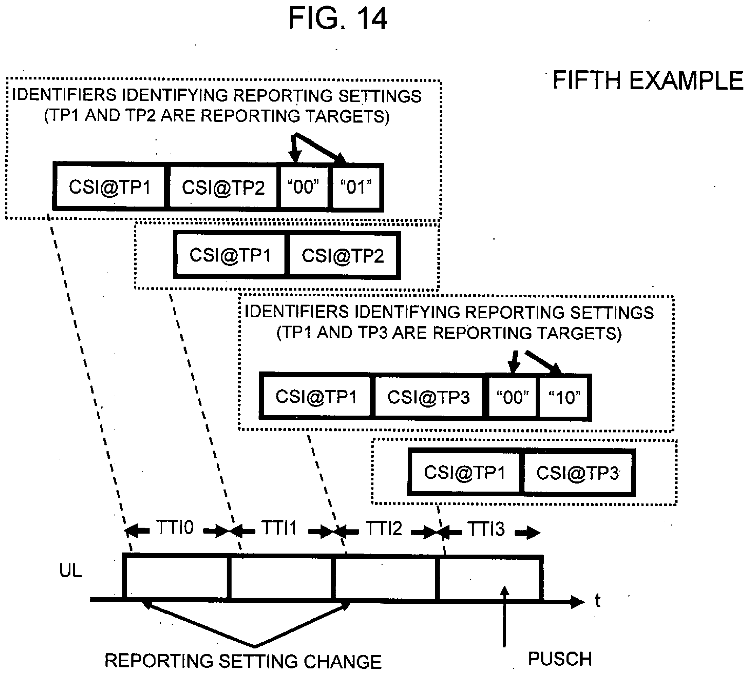

A description will be given of a fifth example in the above-described second exemplary embodiment. In RRC signaling in the above-described fourth example, reporting sets and feedback methods for the reporting sets are notified to the network side. In the fifth example, however, reporting-target transmission points and feedback methods for the transmission points are notified. Moreover, in feedback of the fourth example, notified is a selected one of reporting settings, which include combinations of multiple transmission points. In the fifth example, however, only information about reporting settings to be applied, among respective reporting settings for the individual transmission points notified through RRC signaling, is notified to the network side. Note that RRC signaling used to notify multiple reporting settings is as described in the second example, and therefore a description thereof will be omitted. A description will be given of an example in which the identifiers of selected reporting settings only are notified by using feedback only when reporting setting is changed, with reference to FIG. 14.

Referring to FIG. 14, the identifiers "00" and "01" identifying the reporting settings 1 and 2 are notified through feedback at TTI0, and the identifiers "00" and "10" identifying the reporting settings 1 and 3 are notified through feedback at TTI2 when reporting setting is updated to the reporting setting 2. Note that identifiers identifying reporting settings may be inserted at every TTI as in the above-described fourth example, not that identifiers identifying reporting settings are transmitted only at TTIs when reporting setting is changed (only at TTI0 and TTI2).

In general, as the number of elements in a reporting set increases, the number of combinations for reporting sets to be notified through RRC signaling grows, and so the overhead of RRC signaling becomes larger. However, according to the fifth example, a reporting setting can be configured for each transmission point, bringing about the advantage that an increase in the overhead of RRC signaling can be suppressed.

### 2.5) Sixth example

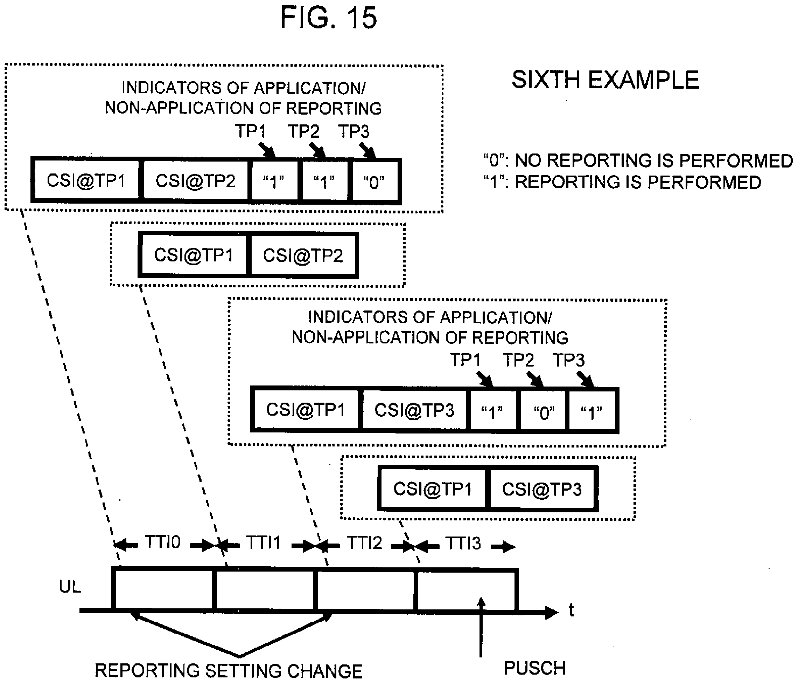

A description will be given of a sixth example in the above-described second exemplary embodiment. In the sixth example, reporting-target transmission points and feedback methods for the transmission points are notified through RRC signaling as in the fifth example, but the method of feedback is different from that of the fifth example. In the fifth example, only information about reporting settings to be applied, among respective reporting settings for the individual transmission points notified through RRC signaling, is notified. In the sixth example, however, an indicator of whether or not a reporting setting is applied is notified with respect to each of multiple reporting settings. Note that RRC signaling used to notify multiple reporting settings is as described in the third example, and therefore a description thereof will be omitted. A description will be given of an example in which an indicator of whether or not a reporting setting is applied is notified with respect to each of multiple reporting settings through feedback only when reporting setting is changed, with reference to FIG. 15.

Referring to FIG. 15, it is assumed in this example that an indicator "0" indicates that no reporting is performed, while an indicator "1" indicates that reporting is performed, and that notification thereof is made with respect to the reporting settings 1, 2, and 3 in this order. Accordingly, at TTI0, since it is notified that the reporting settings 1 and 2 are applied, the indicators "1," "1," and "0" are transmitted in this order. At TTI2, since reporting setting is updated to the reporting settings 1 and 3, the indicators "1," "0," and "1" are transmitted in this order.

Note that although the indicators indicating reporting setting are transmitted only at TTIs when reporting setting is changed (only at TTI0 and TTI2) in the sixth example, the indicators indicating reporting setting may be inserted at every TTI as in the fourth example.

According to the sixth example, since a reporting setting can be configured for each transmission point, an increase in the overhead of RRC signaling can be suppressed as in the fifth example. Moreover, indicators with respect to all of the multiple reporting settings are notified through feedback, bringing about the advantage that the overhead of RRC signaling can be made even smaller than that of the fifth example. As described above, according to the second exemplary embodiment, the overhead of a feedback can be suppressed by notifying reporting setting candidates through RRC signaling. Moreover, the UE can determine a reporting setting or reporting settings by using information that is already known to the UE side.

### 3. Third exemplary embodiment

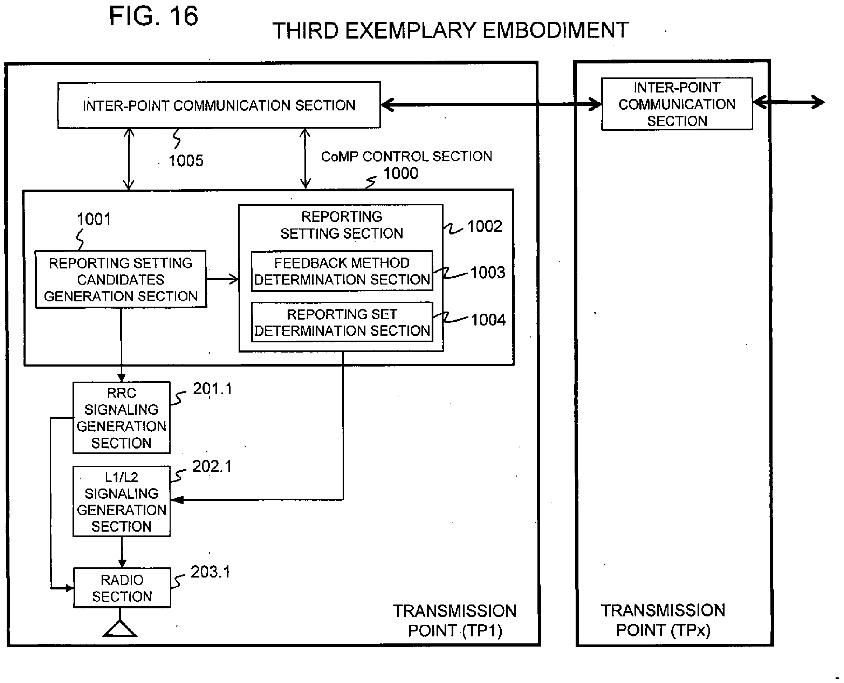

In the first exemplary embodiment shown in FIG. 2, a description is given of a case where the CoMP controller 300 and each transmission point TP are independent of each other. However, the present invention is not limited to this. Transmission points TP may be configured such that each of them is provided with functionality equivalent to the CoMP controller 300 and is connected to and communicable with one another. Hereinafter, transmission points TP according to a third exemplary embodiment of the present invention will be described with reference to FIG. 16. However, functional blocks equivalent to those of the first exemplary embodiment will be denoted by the same reference signs as in the first exemplary embodiment and a description thereof will be omitted.

Referring to FIG. 16, a transmission point TP1 includes an RRC signaling generation section 201.1, an L1/L2 signaling generation section 202.1, and a radio section 203.1 as in the first exemplary embodiment shown in FIG. 2, but further includes a CoMP control section 1000 in the present exemplary embodiment. The CoMP control section 1000 includes a reporting setting candidate generation section 1001, a reporting setting section 1002, and an inter-point communication section 1005. The reporting setting section 1002 includes a feedback method determination section 1003 and a reporting set determination section 1004. The reporting setting candidate generation section 1001 and the reporting setting section 1002 have similar functions to those of the reporting setting candidate generation section 301 and the reporting setting section 302 according to the first exemplary embodiment shown in FIG. 2, respectively, and therefore a description thereof will be omitted. Note that other transmission points (TPx) have similar functional configurations, which are therefore not shown in FIG. 16.

Each transmission point TP according to the third exemplary embodiment, provided with the CoMP control section 1000 and the inter-point communication section 1005, can perform coordinated transmission control while exchanging information with other transmission points TP. Methods for notifying reporting settings are similar to those of the first exemplary embodiment, and therefore a description thereof will be omitted.

Moreover, in the second exemplary embodiment shown in FIG. 11, it is also possible to configure the transmission points TP to be connected to and communicable with each other, by similarly providing each transmission point TP with functionality equivalent to the CoMP controller 700.

### 4. Other embodiments

A wireless communications system according to the present invention may be a system in which the above-described first and second exemplary embodiments coexist. For example, the first and second exemplary embodiments may be switched from one to another for each UE within the system. In this case, the network notifies each UE of an identifier identifying the first or second exemplary embodiment by using RRC signaling. The UEs identify whether to operate according to the first exemplary embodiment or to operate according to the second exemplary embodiment, depending on the information in RRC signaling.

### [Industrial Applicability]

The present invention is applicable to mobile wireless systems in general in which multiple transmission points perform transmission in coordination with each other.

### [Reference Signs List]

- 201.1-201.3: RRC signaling generation sections
- 202.1-202.3: L1/L2 signaling generation sections
- 203.1-203.3: Radio sections
- 300: CoMP controller
- 301: Reporting setting candidate generation section
- 302: Reporting setting section
- 303: Feedback method determination section
- 304: Reporting set determination section
- 400: User terminal (UE)
- 401: Radio section
- 402: CSI measurement section
- 403: Feedback generation section
- 601.1-601.3: RRC signaling generation sections
- 602.1-602.3: Radio sections
- 700: CoMP controller
- 701: Reporting setting candidate generation section
- 800: User terminal (UE)
- 801: Radio section
- 802: CSI measurement section
- 803: Reporting setting section
- 804: Feedback method determination section
- 805: Reporting set determination section
- 806: Feedback generation section
- 1000: CoMP controller
- 1001: Reporting setting candidate generation section
- 1002: Reporting setting section
- 1003: Feedback method determination section
- 1004: Reporting set determination section
- 1005: Inter-point communication section

## Claims

1. A wireless communication system based on a coordinated transmission scheme in which multiple transmission stations (203) included in a network perform transmission in coordination with each other, wherein
the network is configured to notify a plurality of reporting settings for channel state information to a reception station (400) that is a target of the coordinated transmission scheme, and
the transmission stations (203) and the reception station (400) are configured to share, by notifying an identifier corresponding to a reporting setting to be applied from among the plurality of reporting settings from the transmission stations (203) to the reception station (400), the reporting setting to be applied,
**characterized in that** an interval of notifying the identifier corresponding to the reporting setting to be applied is shorter than an interval of notifying the plurality of reporting settings.

2. The wireless communications system according to claim 1, **characterized in that** each of the plurality of reporting settings includes at least information for specifying a different combination of transmission stations (203) that includes at least one transmission station as a reporting target.

3. The wireless communications system according to claim 1 or 2, **characterized in that** each of the plurality of reporting settings further includes information for specifying a feedback method from the reception station (400) to the network that corresponds to the different combination of transmission stations (203).

4. The wireless communications system according to any one of claims 1 to 3, **characterized in that** there are multiple coordinated transmission schemes, wherein the plurality of reporting settings correspond to the multiple coordinated transmission schemes, respectively.

5. The wireless communications system according to any one of claims 1 to 4, **characterized in that** the transmission stations (203) and the reception station (400) are configured to dynamically share the reporting setting to be applied.

6. The wireless communications system according to any one of claims 1 to 5, **characterized in that** the reporting setting to be applied is notified between the transmission stations (203) and the reception station (400) only when the reporting setting is changed.

7. The wireless communications system according to any one of claims 1 to 5, **characterized in that** the reporting setting to be applied is notified between the transmission stations (203) and the reception station (400) every time a control signal is transmitted.

8. The wireless communications system according to any one of claims 1 to 7, **characterized in that** the coordinated transmission scheme is any of Joint Transmission (JT), Dynamic Point Selection (DPS), Coordinated Scheduling (CS), and Coordinated Beamforming (CB).

9. The wireless communications system according to any one of claims 1 to 7, **characterized in that** the channel state information includes at least one of information regarding channel quality, Channel Quality Indicator: CQI, information regarding a channel co-variance matrix, channel co-variance information, information regarding a precoding matrix, Precoding Matrix Indicator: PMI, information regarding a transmission rank, Rank Indicator: RI, and information regarding a difference in phase between transmission points, inter transmission point phase difference.

10. A mobile station (400) configured to be a target of a coordinated transmission scheme in a wireless communications system based on the coordinated transmission scheme in which multiple transmission stations (203) included in a network perform transmission in coordination with each other, **characterized by** comprising:
reception means (401) for receiving a plurality of reporting settings for channel state information from the network; and
control means (402) for sharing, by receiving an identifier corresponding to a reporting setting to be applied from among the plurality of reporting settings from the transmission stations (203), the reporting setting to be applied with the transmission stations (203),
**characterized in that** an interval of notifying the identifier corresponding to the reporting setting to be applied is shorter than an interval of notifying the plurality of reporting settings.

11. The mobile station according to claim 10, **characterized in that** each of the plurality of reporting settings includes at least information for specifying a different combination of transmission stations (203) that includes at least one transmission station as a reporting target.

12. The mobile station according to claim 10 or 11, **characterized in that** each of the plurality of reporting settings further includes information for specifying a feedback method to the network that corresponds to the different combination of transmission stations (203).

13. The mobile station according to any one of claims 10 to 12, **characterized in that** there are multiple coordinated transmission schemes in the wireless communication system, wherein the plurality of reporting settings correspond to the multiple coordinated transmission schemes, respectively.

14. The mobile station according to any one of claims 10 to 13, **characterized in that** the reporting setting to be applied is dynamically shared with the transmission stations (203).

15. The mobile station according to any one of claims 10 to 14, **characterized in that** the reporting setting to be applied is notified between the transmission stations (203) and the mobile station (400) only when reporting setting is changed.

16. The mobile station according to any one of claims 10 to 14, **characterized in that** the reporting setting to be applied is notified between the transmission stations (203) and the mobile station (400) every time a control signal is transmitted.

17. The mobile station according to any one of claims 10 to 16, **characterized in that** the coordinated transmission scheme is any of Joint Transmission (JT), Dynamic Point Selection (DPS), Coordinated Scheduling (CS), and Coordinated Beamforming (CB).

18. The mobile station according to any one of claims 10 to 17, **characterized in that** the channel state information includes at least one of information regarding channel quality, Channel Quality Indicator: CQI, information regarding a channel co-variance matrix, channel co-variance information, information regarding a precoding matrix, Precoding Matrix Indicator: PMI, information regarding a transmission rank, Rank Indicator: RI, and information regarding a difference in phase between transmission points, inter transmission point phase difference.

19. A radio base station in a wireless communication system based on a coordinated transmission scheme, wherein the radio base station is configured to perform transmission to mobile stations in coordination with other radio base stations included in a network, the radio base station comprising:
transceiver means (203) for performing wireless communication with a mobile station (400) that is a target of the coordinated transmission scheme; and
control means (201, 202) for notifying the mobile station (400) of a plurality of reporting settings for channel state information and sharing, by notifying an identifier corresponding to a reporting setting to be applied from among the plurality of reporting settings to the mobile station (400), the reporting setting to be applied with the mobile station (400),
wherein an interval of notifying the identifier corresponding to the reporting setting to be applied is shorter than an interval of notifying the plurality of reporting settings.

20. A method for controlling reporting setting in a wireless communication system based on a coordinated transmission scheme in which multiple transmission stations (203) included in a network perform transmission in coordination with each other, the method comprising:
by the network, notifying (501) a plurality of reporting settings for channel state information to a reception station (400) that is a target of the coordinated transmission scheme; and
by the transmission stations (203) and the reception station (400), sharing, by notifying (503) an identifier corresponding to a reporting setting to be applied from among the plurality of reporting settings from the transmission stations (203) to the reception station (400), the reporting setting to be applied among the plurality of reporting settings;
**characterized in that** an interval of notifying the identifier corresponding to the reporting setting to be applied is shorter than an interval of notifying the plurality of reporting settings.

21. The method for controlling reporting setting according to claim 20, **characterized in that** each of the plurality of reporting settings includes at least information for specifying a different combination of transmission stations (203) that includes at least one transmission station as a reporting target.

22. The method for controlling reporting setting according to claim 20 or 21, **characterized in that** each of the plurality of reporting settings further includes information for specifying a feedback method from the reception station (400) to the network that corresponds to the different combination of transmission stations (203).

23. The method for controlling reporting setting according to any one of claims 20 to 22, **characterized in that** there are multiple coordinated transmission schemes, wherein the plurality of reporting settings correspond to the multiple coordinated transmission schemes, respectively.

24. The method for controlling reporting setting according to any one of claims 20 to 23, **characterized in that** the transmission stations (203) and the reception station (400) dynamically share the reporting setting to be applied.

25. The method for controlling reporting setting according to any one of claims 20 to 24, **characterized in that** the reporting setting to be applied is notified between the transmission stations (203) and the reception station (400) only when reporting setting is changed.

26. The method for controlling reporting setting according to any one of claims 20 to 24, **characterized in that** the reporting setting to be applied is notified between the transmission stations (203) and the reception station (400) every time a control signal is transmitted.

## Patentansprüche

1. Drahtloskommunikationssystem, das auf einem koordinierten Übertragungsverfahren basiert, bei dem mehrere in einem Netzwerk vorgesehene Sendestationen (203) Übertragungen koordiniert miteinander ausführen, wobei
das Netzwerk dafür konfiguriert ist, mehrere Meldungskonfigurationen für Kanalzustandsinformation an eine Empfangsstation (400) zu übermitteln, die ein Ziel des koordinierten Übertragungsverfahrens ist, und
die Sendestationen (203) und die Empfangsstation (400) dafür konfiguriert sind, die anzuwendende Meldungskonfiguration gemeinsam zu verwenden, indem eine Identifizierung, die einer anzuwendenden Meldungskonfiguration unter den mehreren Meldungskonfigurationen entspricht, von den Sendestationen (203) an die Empfangsstation (400) übermittelt wird,
**dadurch gekennzeichnet, dass** ein Übermittlungsintervall der der anzuwendenden Meldungskonfiguration entsprechenden Identifizierung kürzer ist als ein Übermittlungsintervall der Meldungskonfigurationen.

2. Drahtloskommunikationssystem nach Anspruch 1, **dadurch gekennzeichnet, dass** jede der mehreren Meldungskonfigurationen mindestens Information zum Spezifizieren einer anderen Kombination von Sendestationen (203) aufweist, die mindestens eine Sendestation als ein Meldungsziel aufweist.

3. Drahtloskommunikationssystem nach Anspruch 1 oder 2, **dadurch gekennzeichnet, dass** jede der mehreren Meldungskonfigurationen ferner Information zum Spezifizieren eines Rückmeldungsverfahrens von der Empfangsstation (400) zum Netzwerk enthält, das der anderen Kombination von Sendestationen (203) entspricht.

4. Drahtloskommunikationssystem nach einem der Ansprüche 1 bis 3, **dadurch gekennzeichnet, dass** mehrere koordinierte Übertragungsverfahren zur Verfügung stehen, wobei die mehreren Meldungskonfigurationen jeweils den mehreren koordinierten Übertragungsverfahren entsprechen.

5. Drahtloskommunikationssystem nach einem der Ansprüche 1 bis 4, **dadurch gekennzeichnet, dass** die Sendestationen (203) und die Empfangsstation (400) dafür konfiguriert, die anzuwendende Meldungskonfiguration dynamisch gemeinsam zu verwenden.

6. Drahtloskommunikationssystem nach einem der Ansprüche 1 bis 5, **dadurch gekennzeichnet, dass** die anzuwendende Meldungskonfiguration zwischen den Sendestationen (203) und der Empfangsstation (400) nur dann übermittelt wird, wenn die Meldungskonfiguration geändert wird.

7. Drahtloskommunikationssystem nach einem der Ansprüche 1 bis 5, **dadurch gekennzeichnet, dass** die anzuwendende Meldungskonfiguration zwischen den Sendestationen (203) und der Empfangsstation (400) immer dann übermittelt wird, wenn ein Steuersignal übertragen wird.

8. Drahtloskommunikationssystem nach einem der Ansprüche 1 bis 7, **dadurch gekennzeichnet, dass** das koordinierte Übertragungsverfahren ein beliebiges Übertragungsverfahren unter Joint Transmission (JT), Dynamic Point Selection (DPS), Coordinated Scheduling (CS) und Coordinated Beamforming (CB) ist.

9. Drahtloskommunikationssystem nach einem der Ansprüche 1 bis 7, **dadurch gekennzeichnet, dass** die Kanalzustandsinformation mindestens eine der folgenden Informationen enthält: Information über die Kanalqualität (Channel Quality Indicator: CQI), Information über eine Kanal-Kovarianzmatrix (channel co-variance information), Information über eine Vorcodiermatrix (Precoding Matrix Indicator: PMI), Information über einen Übertragungsrang (Rank Indicator: RI) und Information über eine Phasendifferenz zwischen Übertragungspunkten (Inter Transmission Point Phase Difference).

10. Mobilstation (400), die als ein Ziel eines koordinierten Übertragungsverfahrens in einem Drahtloskommunikationssystem konfiguriert ist, das auf dem koordinierten Übertragungsverfahren basiert, bei dem mehrere in einem Netzwerk vorgesehene Sendestationen (203) eine Übertragung koordiniert miteinander ausführen, **dadurch gekennzeichnet, dass** die Mobilstation aufweist:
eine Empfangseinrichtung (401) zum Empfangen mehrerer Meldungskonfigurationen für Kanalzustandsinformation vom Netzwerk; und
eine Steuereinrichtung (402) zum gemeinsamen Verwenden der anzuwendenden Meldungskonfiguration mit den Sendestationen (203) durch Empfangen einer Identifizierung, die einer anzuwendenden Meldungskonfiguration unter den mehreren Meldungskonfigurationen entspricht, von den Sendestationen (203),
**dadurch gekennzeichnet, dass** ein Übermittlungsintervall der der anzuwendenden Meldungskonfiguration entsprechenden Identifizierung kürzer ist als ein Übermittlungsintervall der mehreren Meldungskonfigurationen.

11. Mobilstation nach Anspruch 10, **dadurch gekennzeichnet, dass** jede der mehreren Meldungskonfigurationen mindestens Information zum Spezifizieren einer anderen Kombination von Sendestationen (203) aufweist, die mindestens eine Sendestation als Meldungsziel enthält.

12. Mobilstation nach Anspruch 10 oder 11, **dadurch gekennzeichnet, dass** jede der mehreren Meldungskonfigurationen ferner Information zum Spezifizieren eines Rückmeldungsverfahrens zum Netzwerk aufweist, das der anderen Kombination von Sendestationen (203) entspricht.

13. Mobilstation nach einem der Ansprüche 10 bis 12, **dadurch gekennzeichnet, dass** mehrere koordinierte Übertragungsverfahren im Drahtloskommunikationssystem zur Verfügung stehen, wobei die mehreren Meldungskonfigurationen jeweils den mehreren koordinierten Übertragungsverfahren entsprechen.

14. Mobilstation nach einem der Ansprüche 10 bis 13, **dadurch gekennzeichnet, dass** die anzuwendende Meldungskonfiguration mit den Sendestationen (203) dynamisch gemeinsam verwendet wird.

15. Mobilstation nach einem der Ansprüche 10 bis 14, **dadurch gekennzeichnet, dass** die anzuwendende Meldungskonfiguration zwischen den Sendestationen (203) und der Mobilstation (400) nur dann übermittelt wird, wenn die Meldungskonfiguration geändert wird.

16. Mobilstation nach einem der Ansprüche 10 bis 14, **dadurch gekennzeichnet, dass** die anzuwendende Meldungskonfiguration zwischen den Sendestationen (203) und der Mobilstation (400) immer dann übermittelt wird, wenn ein Steuersignal übertragen wird.

17. Mobilstation nach einem der Ansprüche 10 bis 16, **dadurch gekennzeichnet, dass** das koordinierte Übertragungsverfahren ein beliebiges Übertragungsverfahren unter Joint Transmission (JT), Dynamic Point Selection (DPS), Coordinated Scheduling (CS) und Coordinated Beamforming (CB) ist.

18. Mobilstation nach einem der Ansprüche 10 bis 17, **dadurch gekennzeichnet, dass** die Kanalzustandsinformation mindestens eine der folgenden Informationen enthält: Information über die Kanalqualität (Channel Quality Indicator: CQI), Information über eine Kanal-Kovarianzmatrix (channel co-variance information), Information über eine Vorcodiermatrix (Precoding Matrix Indicator: PMI), Information über einen Übertragungsrang (Rank Indicator: RI) und Information über eine Phasendifferenz zwischen Übertragungspunkten (Inter Transmission Point Phase Difference).

19. Funkbasisstation in einem Drahtloskommunikationssystem, das auf einem koordinierten Übertragungsverfahren basiert, wobei die Funkbasisstation dafür konfiguriert ist, eine Übertragung zu Mobilstationen in Koordination mit anderen im Netzwerk enthaltenen Funkbasisstationen auszuführen, wobei die Funkbasisstation aufweist:
einen Transceiver (203) zum Ausführen einer Drahtloskommunikation mit einer Mobilstation (400), die ein Ziel des koordinierten Übertragungsverfahrens ist; und
eine Steuereinrichtung (201, 202) zum Benachrichtigen der Mobilstation (400) über mehrere Meldungskonfigurationen für Kanalzustandsinformation und zum gemeinsamen Verwenden einer anzuwendenden Meldungskonfiguration mit der Mobilstation (400) durch Übermitteln einer Identifizierung, die der anzuwendenden Meldungskonfiguration unter den mehreren Meldungskonfigurationen entspricht, an die Mobilstation (400),
wobei ein Übermittlungsintervall der der anzuwendenden Meldungskonfiguration entsprechenden Identifizierung kürzer ist als ein Übermittlungsintervall der Meldungskonfigurationen.

20. Verfahren zum Steuern einer Meldungskonfiguration in einem Drahtloskommunikationssystem, das auf einem koordinierten Übertragungsverfahren basiert, in dem mehrere in einem Netzwerk vorgesehene Sendestationen (203) eine Übertragung koordiniert miteinander ausführen, wobei das Verfahren die Schritte aufweist:
Übermitteln (501) mehrerer Meldungskonfigurationen für Kanalzustandsinformation an eine Empfangsstation (400), die ein Ziel des koordinierten Übertragungsverfahrens ist, durch das Netzwerk; und
gemeinsames Verwenden einer anzuwendenden Meldungskonfiguration unter den mehreren Meldungskonfigurationen durch die Sendestationen (203) und die Empfangsstation (400) durch Übermitteln (503) einer Identifizierung, die der anzuwendenden Meldungskonfiguration unter den mehreren Meldungskonfigurationen entspricht, von den Sendestationen (203) an die Empfangsstation (400);
**dadurch gekennzeichnet, dass**
ein Übermittlungsintervall der der anzuwendenden Meldungskonfiguration entsprechenden Identifizierung kürzer ist als ein Übermittlungsintervall der Meldungskonfigurationen.

21. Verfahren nach Anspruch 20, **dadurch gekennzeichnet, dass**
jede der mehreren Meldungskonfigurationen mindestens eine Information zum Spezifizieren einer anderen Kombination von Sendestationen (203) aufweist, die mindestens eine Sendestation als ein Meldungsziel aufweist.

22. Verfahren nach Anspruch 20 oder 21, **dadurch gekennzeichnet, dass** jede der mehreren Meldungskonfigurationen ferner Information zum Spezifizieren eines Rückmeldungsverfahrens von der Empfangsstation (400) zum Netz enthält, das der anderen Kombination von Sendestationen (203) entspricht.

23. Verfahren nach einem der Ansprüche 20 bis 22, **dadurch gekennzeichnet, dass** mehrere koordinierte Übertragungsverfahren zur Verfügung stehen, wobei die mehreren Meldungskonfigurationen jeweils den mehreren koordinierten Übertragungsverfahren entsprechen.

24. Verfahren nach einem der Ansprüche 20 bis 23, **dadurch gekennzeichnet, dass** die Sendestationen (203) und die Empfangsstation (400) die anzuwendende Meldungskonfiguration dynamisch gemeinsam verwenden.

25. Verfahren nach einem der Ansprüche 20 bis 24, **dadurch gekennzeichnet, dass** die anzuwendende Meldungskonfiguration zwischen den Sendestationen (203) und der Empfangsstation (400) nur dann übermittelt wird, wenn die Meldungskonfiguration geändert wird.

26. Verfahren nach einem der Ansprüche 20 bis 24, **dadurch gekennzeichnet, dass** die anzuwendende Meldungskonfiguration zwischen den Sendestationen (203) und der Empfangsstation (400) immer dann übermittelt wird, wenn ein Steuersignal übertragen wird.

## Revendications

1. Système de communication sans fil sur la base d'un schéma de transmissions coordonnées dans lequel de multiples stations de transmission (203) incluses dans un réseau réalisent une transmission en coordination les unes avec les autres, dans lequel
le réseau est configuré pour notifier une pluralité de réglages de rapport pour des informations d'état de canal à une station de réception (400) qui est une cible du schéma de transmissions coordonnées, et
les stations de transmission (203) et la station de réception (400) sont configurées pour partager, par notification d'un identifiant, correspondant à un réglage de rapport à appliquer parmi la pluralité de réglages de rapport, des stations de transmission (203) à la station de réception (400), le réglage de rapport à appliquer,
**caractérisé en ce qu'**un intervalle de notification de l'identifiant correspondant au réglage de rapport à appliquer est plus court qu'un intervalle de notification de la pluralité de réglages de rapport.

2. Système de communication sans fil selon la revendication 1, **caractérisé en ce que** chaque réglage de la pluralité de réglages de rapport inclut au moins des informations pour spécifier une combinaison différente de stations de transmission (203) qui inclut au moins une station de transmission en tant que cible des rapports.

3. Système de communication sans fil selon la revendication 1 ou 2, **caractérisé en ce que** chaque réglage de la pluralité de réglages de rapport inclut en outre des informations pour spécifier un procédé de renvoi d'informations de la station de réception (400) au réseau qui correspond à la combinaison différente de stations de transmission (203).

4. Système de communication sans fil selon l'une quelconque des revendications 1 à 3, **caractérisé en ce qu'**il y a de multiples schémas de transmissions coordonnées, dans lequel la pluralité des réglages de rapport correspondent respectivement aux multiples schémas de transmissions coordonnées.

5. Système de communication sans fil selon l'une quelconque des revendications 1 à 4, **caractérisé en ce que** les stations de transmission (203) et la station de réception (400) sont configurées pour partager dynamiquement le réglage de rapport à appliquer.

6. Système de communication sans fil selon l'une quelconque des revendications 1 à 5, **caractérisé en ce que** le réglage de rapport à appliquer est notifié entre les stations de transmission (203) et la station de réception (400) uniquement lorsque le réglage de rapport est changé.

7. Système de communication sans fil selon l'une quelconque des revendications 1 à 5, **caractérisé en ce que** le réglage de rapport à appliquer est notifié entre les stations de transmission (203) et la station de réception (400) chaque fois qu'un signal de commande est transmis.

8. Système de communication sans fil selon l'une quelconque des revendications 1 à 7, **caractérisé en ce que** le schéma de transmissions coordonnées est l'un quelconque parmi une transmission commune (JT), une sélection de point dynamique (DPS), une planification coordonnée (CS) et une formation de faisceau coordonnée (CB).

9. Système de communication sans fil selon l'une quelconque des revendications 1 à 7, **caractérisé en ce que** les informations d'état de canal incluent au moins un parmi une information concernant la qualité de canal, un indicateur de qualité de canal : CQI, une information concernant une matrice de covariance de canal, une information de covariance de canal, une information concernant une matrice de précodage, un indicateur de matrice de précodage : PMI, une information concernant un rang de transmission, un indicateur de rang : RI, et une information concernant une différence de phase entre des points de transmission, une différence de phase entre points de transmission.

10. Station mobile (400) configurée pour être une cible d'un schéma de transmissions coordonnées dans un système de communication sans fil basé sur le schéma de transmissions coordonnées dans lequel de multiples stations de transmission (203) incluses dans un réseau réalisent une transmission en coordination les unes avec les autres, **caractérisée en ce qu'**elle comprend :
un moyen de réception (401) pour recevoir une pluralité de réglages de rapport pour des informations d'état de canal depuis le réseau ; et
un moyen de commande (402) pour partager, par une réception d'un identifiant correspondant à un réglage de rapport à appliquer parmi la pluralité de réglages de rapport, en provenance des stations de transmission (203), le réglage de rapport à appliquer aux stations de transmission (203),
**caractérisée en ce qu'**un intervalle de notification de l'identifiant correspondant au réglage de rapport à appliquer est plus court qu'un intervalle de notification de la pluralité de réglages de rapport.

11. Station mobile selon la revendication 10, **caractérisée en ce que** chaque réglage de la pluralité de réglages de rapport inclut au moins des informations pour spécifier une combinaison différente de stations de transmission (203) qui inclut au moins une station de transmission en tant que cible des rapports.

12. Station mobile selon la revendication 10 ou 11, **caractérisée en ce que** chaque réglage de la pluralité de réglages de rapport inclut en outre des informations pour spécifier un procédé de renvoi d'informations vers le réseau qui correspond à la combinaison différente de stations de transmission (203).

13. Station mobile selon l'une quelconque des revendications 10 à 12, **caractérisée en ce qu'**il y a de multiples schémas de transmissions coordonnées dans le système de communication sans fil, dans lequel la pluralité des réglages de rapport correspondent respectivement aux multiples schémas de transmissions coordonnées.

14. Station mobile selon l'une quelconque des revendications 10 à 13, **caractérisée en ce que** le réglage de rapport à appliquer est partagé dynamiquement avec les stations de transmission (203).

15. Station mobile selon l'une quelconque des revendications 10 à 14, **caractérisée en ce que** le réglage de rapport à appliquer est notifié entre les stations de transmission (203) et la station mobile (400) uniquement lorsque le réglage de rapport est changé.

16. Station mobile selon l'une quelconque des revendications 10 à 14, **caractérisée en ce que** le réglage de rapport à appliquer est notifié entre les stations de transmission (203) et la station mobile (400) chaque fois d'un signal de commande est transmis.

17. Station mobile selon l'une quelconque des revendications 10 à 16, **caractérisée en ce que** le schéma de transmissions coordonnées est l'un quelconque parmi une transmission commune (JT), une sélection de point dynamique (DPS), une planification coordonnée (CS) et une formation de faisceau coordonnée (CB).

18. Station mobile selon l'une quelconque des revendications 10 à 17, **caractérisée en ce que** les informations d'état de canal incluent au moins un parmi une information concernant la qualité de canal, un indicateur de qualité de canal : CQI, une information concernant une matrice de covariance de canal, une information de covariance de canal, une information concernant une matrice de précodage, un indicateur de matrice de précodage : PMI, une information concernant un rang de transmission, un indicateur de rang : RI, et une information concernant une différence de phase entre des points de transmission, une différence de phase entre points de transmission.

19. Station de base radio dans un système de communication sans fil sur la base d'un schéma de transmissions coordonnées, dans laquelle la station de base radio est configurée pour réaliser une transmission vers des stations mobiles en coordination avec d'autres stations de base radio incluses dans un réseau, la station de base radio comprenant :
un moyen d'émission-réception (203) pour réaliser une communication sans fil avec une station mobile (400) qui est une cible du schéma de transmissions coordonnées ; et
un moyen de commande (201, 202) pour notifier à la station mobile (400) une pluralité de réglages de rapport pour des informations d'état de canal et pour partager, par notification d'un identifiant correspondant à un réglage de rapport à appliquer parmi la pluralité de réglages de rapport, à la station mobile (400), le réglage de rapport à appliquer à la station mobile (400),
dans lequel un intervalle de notification de l'identifiant correspondant au réglage de rapport à appliquer est plus court qu'un intervalle de notification de la pluralité de réglages de rapport.

20. Procédé de commande de réglage de rapport dans un système de communication sans fil sur la base d'un schéma de transmissions coordonnées dans lequel de multiples stations de transmission (203) incluses dans un réseau réalisent une transmission en coordination les unes avec les autres, le procédé comprenant :
par le réseau, la notification (501) d'une pluralité de réglages de rapport pour des informations d'état de canal à une station de réception (400) qui est une cible du schéma de transmissions coordonnées ; et
par les stations de transmission (203) et la station de réception (400), le partage, par notification (503) d'un identifiant correspondant à un réglage de rapport à appliquer parmi la pluralité de réglages de rapport, des stations de transmission (203) à la station de réception (400), du réglage de rapport à appliquer parmi la pluralité de réglages de rapport ;
**caractérisé en ce qu'**un intervalle de notification de l'identifiant correspondant au réglage de rapport à appliquer est plus court qu'un intervalle de notification de la pluralité de réglages de rapport.

21. Procédé de commande de réglage de rapport selon la revendication 20, **caractérisé en ce que** chaque réglage de la pluralité de réglages de rapport inclut au moins des informations pour spécifier une combinaison différente de stations de transmission (203) qui inclut au moins une station de transmission en tant que cible des rapports.

22. Procédé de commande de réglage de rapport selon la revendication 20 ou 21, **caractérisé en ce que** chaque réglage de la pluralité de réglages de rapport inclut en outre des informations pour spécifier un procédé de renvoi d'informations de la station de réception (400) au réseau qui correspond à la combinaison différente de stations de transmission (203).

23. Procédé de commande de réglage de rapport selon l'une quelconque des revendications 20 à 22, **caractérisé en ce qu'**il y a de multiples schémas de transmissions coordonnées, dans lequel la pluralité de réglages de rapport correspond respectivement aux multiples schémas de transmissions coordonnées.

24. Procédé de commande de réglage de rapport selon l'une quelconque des revendications 20 à 23, **caractérisé en ce que** les stations de transmission (203) et la station de réception (400) partagent dynamiquement le réglage de rapport à appliquer.

25. Procédé de commande de réglage de rapport selon l'une quelconque des revendications 20 à 24, **caractérisé en ce que** le réglage de rapport à appliquer est notifié entre les stations de transmission (203) et la station de réception (400) uniquement lorsque le réglage de rapport est changé.

26. Procédé de commande de réglage de rapport selon l'une quelconque des revendications 20 à 24, **caractérisé en ce que** le réglage de rapport à appliquer est notifié entre les stations de transmission (203) et la station de réception (400) chaque fois qu'un signal de commande est transmis.
